# EUROPÄISCHE PATENTANMELDUNG

(11) **EP 2 128 826 A1**
(43) Veröffentlichungstag der Anmeldung: **02.12.2009**
(21) Anmeldenummer: 09159627.0
(22) Anmeldetag: 07.05.2009
(51) Int. Cl.: G07C 9/00, B07C 3/00, B64F 1/36, G06Q 10/00

(54) **Verfahren zum selbsttätigen Einchecken von Passagieren und deren Gepäck**

(30) Priorität: 27.05.2008 DE 102008025248
(71) Anmelder: Siemens AG, Wittelsbacher Platz 2 80333 München (DE)
(72) Erfinder: Bayer, Thomas, Virginia Water, GU25 4JF, Surrey (GB); Ten Berge, Balthazar-Simon, 63500, Seligenstadt (DE); Wilke, Wolf-Stephan, 78467, Konstanz (DE)

(57) **Zusammenfassung**

Die Erfindung betrifft ein Verfahren zum selbsttätigen Einchecken von Passagieren und deren Gepäck mittels elektronischer Eingabe der Passagier- und/oder Reisedaten durch den Passagier selbst in ein automatisches Check-In Terminal, in dem, ggf. nach Auswahl verschiedener Kriterien, die Bordkarte (Boarding Pass) und ein oder mehrere Informationsträger zum Anbringen an dem Gepäck erstellt und ausgegeben werden. Um mit geringem Kostenaufwand die Lese- und Erkennungsrate der Informationsträger an den Gepäckstücken deutlich zu verbessern und dem Reisenden das Anbringen der Informationsträger am Gepäck zu erleichtern wird vorgeschlagen, dass als Informationsträger ein leicht an dem Gepäckstück (3) zu befestigender Gepäckanhänger (5) erstellt wird, der mindestens alle Daten und Informationen maschinenlesbar enthält, die für eine spätere Generierung einer international standardisierten, vorzugsweise selbstklebenden Gepäckbanderole (IATA BaggageTags) (11) benötigt werden, welche innerhalb der Transport- und Sortieranlage zusätzlich zu dem Gepäckanhänger (5) an dem Gepäckstück (3) befestigt wird.

## Beschreibung

Verfahren zum selbsttätigen Einchecken von Passagieren und deren Gepäck mittels elektronischer Eingabe der Passagier- und/oder Reisedaten durch den Passagier selbst in ein automatisches Check-In Terminal, in dem, ggf. nach Auswahl verschiedener Kriterien, die Bordkarte (Boarding Pass) und ein oder mehrere Informationsträger zum Anbringen an dem Gepäck erstellt und ausgegeben werden, wobei der Passagier gehalten ist, an jedem eingecheckten Gepäckstück einen der zuvor erstellten Informationsträger zu befestigen, bevor er das Gepäckstück der Transport- und Sortieranlage übergibt.

Die nachfolgend beschriebenen Lösungen sind für jede Art von Reisegepäck anwendbar, und zwar für solches Gepäck, das der Reisende nicht als Handgepäck mit sich führt, sondern über ein Transport- und Sortiersystem zum Verstauen im Gepäckraum des Verkehrsmittels aufgibt. Wenn auch die nachfolgende Lösung insbesondere Fluggepäck betrifft, so ist die Erfindung gleichsam bei anderen Verkehrsmitteln, wie z.B. Kreuzfahrtschiffen anwendbar, wo es darauf ankommt, in möglichst kurzer Zeit und mit wenig Aufwand eine große Anzahl von Gepäckstücken in Empfang zu nehmen und einem Zielort zuzuführen. Dennoch wird die Erfindung im Folgenden beispielhaft im Zusammenhang mit Fluggepäckhandling beschrieben.

Derzeit wird an jedem Fluggepäckstück beim Einchecken am Check-In Schalter oder Check-In Terminal eine Banderole als Informationsträger angebracht, die von der International Air Transport Association, kurz IATA, standardisiert ist und als sog. "IATA Baggage Tag" bezeichnet wird. Dieser Tag enthält zum einen einen ID-Barcode nach IATA-Vorgabe, zum anderen aber auch Klartextinformation, z.B. über den Zielflughafen und den Umsteigeflughafen. Auf den Gepäcksortieranlagen in den Flughäfen werden allerdings nur die Barcodes dieser Tags gelesen. Aus verschiedenen Gründen ergeben sich jedoch große Qualitätsunterschiede beim Lesen der Informationsträger.

Es ist bekannt, dass die Erkennungsraten bei sog. "Transfergepäck" i.d.R. deutlich niedriger sind, als die Erkennungsraten bei auf dem Abflug-Flughafen selbst eingechecktem Gepäck. Die Informationsträger (IATA BaggageTag) des Transfergepäcks sind oft durch die vorangegangenen Prozesse bereits umgeknickt oder beschädigt, oder fehlen ganz. Dies führt dazu, dass ein relativ großer Anteil des Transfergepäcks fehlgeleitet wird oder zum manuellen Codieren gelangt, mit entsprechendem Zeitverlust in der Verarbeitung. Dieser Zeitverlust wiederum führt dazu, dass ein Teil der Gepäckstücke nicht rechtzeitig das Anschlussflugzeug erreicht. Dies stellt für die Fluggesellschaften ein großes Problem dar, da damit eine Einbuße an Service-Qualität sowie erhebliche Kosten für das nachträgliche Zustellen des Gepäcks einhergehen.

Ein weiteres Problem ist, dass der Barcode keine Zielinformationen enthält; denn diese befinden sich auf Datenbank-Rechnern, z.B. Sort Allocation Computer der Baggage-Anlage oder den Datenbanken der Fluggesellschaften (BSM-Code), welche zunächst angefragt werden müssen. Es kommt dadurch zu einer verspäteten Übermittlung der Zielinformation, so dass diese Gepäckstücke ebenfalls zum manuellen Codieren gelangen.

Wesentlich ist auch die Identifikation der Gepäckstücke in Zusammenhang mit der Weiterleitung des Datensatzes an die Fluggesellschaften und die Sicherheitsbehörden (BSM-Verfahren).

Neben der zügigeren und sichereren automatischen Verarbeitung der Gepäckstücke sind die Fluggesellschaften auch an Rationalisierungsmassnahmen beim Einchecken des Gepäcks interessiert. Lässt sich das Einchecken des Passagiers noch relativ leicht durch einen Automaten bewerkstelligen, so gestaltet sich dies für das Einchecken des Gepäcks schon deutlich schwieriger. Versuche haben nämlich gezeigt, dass das Anbringen des "IATA BaggageTag" durch den Passagier selbst nicht praktikabel ist. Der Grund ist die Ausführung als lang gezogenes Klebe-Tag, dessen Schutzschicht abgezogen werden muss, um die mit Klebstoff beschichteten Schichten zu einer Schlaufe um einen Traggriff des Gepäckstückes zusammenzufügen. Das Klebe-Tag sollte bei der Anbringung relativ genau zusammengeklebt werden, da es sich sonst durch überstehende Klebeschichten in ungünstiger Weise mit dem Gepäckstück verbinden kann, was wiederum zu einer Reduktion der Leseraten führen kann.

Seitens der IATA wurde eine Studie angefertigt, mit dem Ziel, das Problem schlechter Leseraten mittels der RFID-Technik zu lösen. Die Idee ist dabei, das "IATA BaggageTag" um einen integrierten RFID-Tag zu erweitern. Allerdings würden sich die Kosten eines Tags dadurch in etwa verzehnfachen. Zudem würde eine Umrüstung / Erneuerung der Tag-Drucker erforderlich werden, sowie die Installation von RFID-Lesetunneln auf den Gepäcksortieranlagen. Insgesamt ist dieser Lösungsansatz als kostenintensiver zu bewerten, so dass nach Alternativen gesucht wird.

Die vorliegende Erfindung hat sich die Aufgabe gestellt, ein Verfahren zum Einchecken von Reisegepäck zu schaffen, das die nachfolgende Lese- und Erkennungsrate der Informationsträger an den Gepäckstücken deutlich verbessert und dabei den Kostenaufwand niedrig hält. Zudem soll der in das Verfahren eingebezogene Reisende seine Tätigkeit leicht ausführen können.

Erfindungsgemäß wird das eingangs geschilderte gattungsgemäße Verfahren abgeändert, indem als Informationsträger ein leicht an dem Gepäckstück zu befestigender Gepäckanhänger erstellt wird, der mindestens alle Daten und Informationen maschinenlesbar enthält, die für eine spätere Generierung einer international standardisierten, vorzugsweise selbstklebenden Gepäckbanderole (IATA BaggageTags) benötigt werden, welche innerhalb der Transport- und Sortieranlage zusätzlich zu dem Gepäckanhänger an dem Gepäckstück befestigt wird.

Vorteilhafterweise enthält der Baggage Tag auch noch zusätzlich auslesbare Zielinformation, welche das Sortieren des Gepäckstücks auch bei verspäteter Antwort des Datenbank-Rechners noch ermöglicht.

Die Einführung eines von dem Passagier leicht an dem Gepäckstück zu befestigenden Gepäckanhängers statt des bislang üblichen, für den Passagier schwer handhabbaren IATA BaggageTags führt zu einem einfachen Prozess des "Self-Check-In" nicht nur für den Passagier selbst sondern auch für seine Gepäckstücke. Der Passagier checkt einfach an einem Automaten ein. Der Automat druckt wie bisher die Bordkarte (den Boarding Pass) und zusätzlich erfindungsgemäß noch einen, oder, abhängig von der Anzahl der Gepäckstücke, mehrere Gepäckanhänger, die auch als Baggage Pass oder Baggage Pässe in Analogie zum Boarding Pass bezeichnet werden können und die das Ausdrucken der IATA BaggageTags zunächst ersetzen.

Nach einem Vorschlag der Erfindung wird der Gepäckanhänger (BaggageTag) (5) als RFID-Anhänger mit festem ID-Code erstellt und ausgegeben, der alle notwendigen Informationen enthält. Alternativ kann der Gepäckanhänger, oder der Boarding Pass, aus verschleißfestem, vorzugsweise reißfesterem Papier, Pappe oder Kunststoff, aber dennoch vergleichbar mit der Bordkarte erstellt werden, die weiterhin ebenfalls von dem Automaten erstellt und ausgegeben wird. Der Gepäckanhänger (Baggage Pass) kann, wenn auf dem gleichen Papier wie die Bordkarte (Boarding Pass) gedruckt, prinzipiell auch von dem gleichen Drucker erstellt werden. Wird ein anderes (höherwertigeres) Papier oder Kunststoff bevorzugt, wäre ein zweiter Drucker im Automaten erforderlich.

Wird der Gepäckanhänger als RFID-Anhänger mit festem ID-Code ausgeführt, so kann er beim Einchecken am Automaten dem Gepäckstück und dem Passagier zugeordnet werden oder bereits am Gepäckstück angeordnet sein.

Erfindungsgemäß wird der Gepäckanhänger noch mit zusätzlich auslesbaren Zielinformation bedruckt, welche das Sortieren des Gepäckstücks auch bei ausbleibender oder verspäteter Antwort des Datenbank-Rechners ermöglichen.

Nach einem weiteren Merkmal der Erfindung kann es vorteilhaft sein, wenn der Gepäckanhänger (Baggage Pass) die Zieladresse des Passagiers in Klartext enthält, um damit Ankunfts-Services zu unterstützen, z.B. die Zustellung des Gepäcks.

Günstigerweise wird nach einem anderen Merkmal der Erfindung der Gepäckanhänger mit einer leicht handhabbaren Verbindungstechnik mit dem Gepäckstück verbunden. Infrage kommen beispielsweise elastische Bänder, Kunststoffriemen oder ähnlichen bekannten haltbaren Befestigungstechniken, die leicht an dem Griff o.ä. des Gepäckstückes befestigt werden können.

Nachdem der Passagier vom Automaten ausgegebenen Gepäckanhänger am Reisegepäck befestigt ist, legt der Passagier das Gepäckstückes auf eine Fördertechnik (Förderband) auf, von der das Gepäckstück zu einem zentralen Arbeitsplatz transportiert wird, wo die folgenden aufeinanderfolgenden Arbeitsschritte durchgeführt werden:
a. Auslesen der Informationen aus dem Gepäckanhänger,
b. Übermitteln der ausgelesenen Daten an eine Druckeinheit,
c. Drucken einer standardisierten Gepäckbanderole,
d. Anbringen der standardisierten Gepäckbanderole zusätzlich zum Gepäckanhänger.

Das Auslesen des Gepäckanhängers nach Schritt a. kann, wie bekannt mittels eines Barcode-Hand-Lesers erfolgen, der mit dem Drucker für das "IATA BaggageTag" kommuniziert oder im Fall eines RFID-Tags elektronisch erfolgen. Dadurch, dass der Prozess-Schritt des Anbringens der standardisierten Gepäckbanderole, des "IATA BaggageTags", zentralisiert (und damit rationalisiert) werden kann und nicht mehr an vielen einzelnen Check-in-Schaltern erfolgen muss, erfolgt nicht nur eine Zeit und damit Kosteneinsparung; auch die Fehlerquellen durch Anbringen von Banderolen durch in dieser Tätigkeit nicht geübte Passagiere werden minimiert.

Das Gepäckstück durchläuft sodann die Gepäcktransport und - sortieranlage. Neben dem (bereits vorhandenen) Barcode-Leser ist dort erfindungsgemäß eine weitere optische oder elektronische Leseeinrichtung installiert, welche günstigenfalls eines oder mehrere Bilder oder Informationen, sowohl des "IATA BaggageTags" als auch des zusätzlichen Gepäckanhängers (Baggage Pass) erfasst und die darauf befindlichen Informationen auswertet oder zur Auswertung dem Datenbank-Rechner zur Auswertung und/oder zum Abgleich mit den von dem Barcode Leser erfassten Informationen zuleitet.

Die optische oder elektronische Leseeinrichtung versucht nochmals den Barcode und noch andere Elemente (z.B. Textinformationen) auf dem "IATA BaggageTag" zu erfassen. Durch die zusätzliche Leseeinrichtung und den zusätzlichen Gepäckanhänger (Baggage Pass) werden wesentlich mehr Möglichkeiten und Chancen zur Erkennung eröffnet und damit ist zu erwarten, dass die Wahrscheinlichkeit für ein erfolgreiches Lesen auf dem Gepäckstück deutlich ansteigt.

Die Erfindung ist vorteilhaft, sowohl für die Fluggesellschaften, wie auch die Passagiere. Die Fluggesellschaften möchten die Passagiere zum "Self-check-in" motivieren, da sie dadurch Personalkosten sparen können. Die Passagiere müssen dafür zwar eine kleine Unbequemlichkeit, nämlich das Anbringen des Gepäckanhängers (Baggage Pass) in Kauf nehmen, ihnen kann jedoch dadurch eine höhere Service-Qualität und eine höhere Wahrscheinlichkeit für eine pünktliche Ankunft ihres Gepäcks versprochen werden. Dies ist eine relativ starke Motivation für den Passagier.

Doch auch für die Automatenhersteller ergeben sich Vorteile. Die Funktionalität des Druckens der Gepäckanhänger kann in ihre Produkte integriert werden. Nicht zu unterschätzen sind die erheblichen Kostenvorteile durch die Erfindung. Die Verwendung von RFID- Gepäckanhängern hat zudem den Vorteil, dass keine weltweite Standardisierung der RFID-Anhänger benötigt wird, Fluggesellschaften könnten lokal mit proprietären RFID-Tags arbeiten, da später für den Transport die standardisierten IATA-Informationsträger gedruckt und an dem Gepäck angebracht werden.

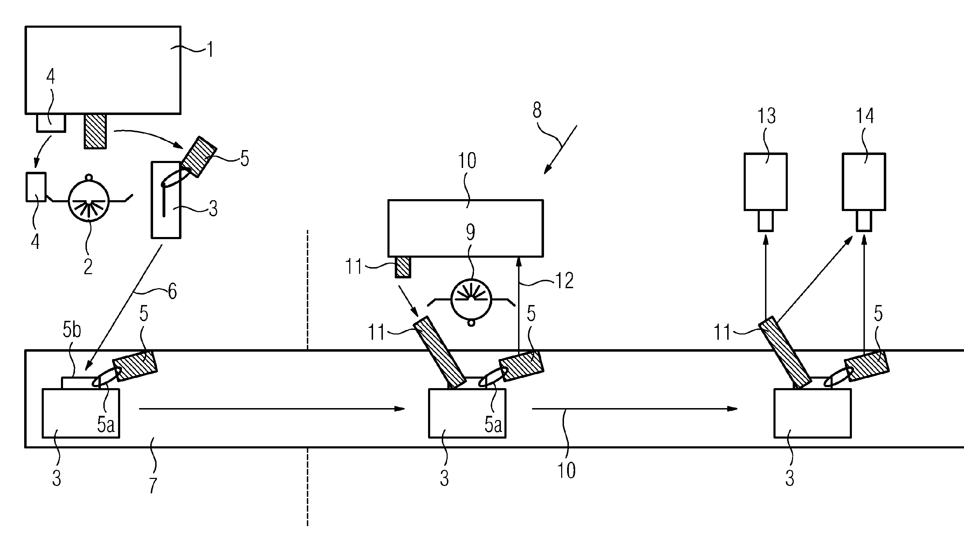

Ein Ausführungsbeispiel der Erfindung ist schematisch in der einzigen Zeichnungsfigur dargestellt und wird anhand derer nachfolgend beschrieben.

Mit 1 ist in der Zeichnung ein automatisches Terminal beschrieben, das von den Passagieren zum sogenannten "Self-Check-In" verwendet wird. Durch Eingabe der Buchungsdaten, beispielsweise über die Kreditkarte oder eine Vielfliegerkarte druckt der Automat menügeführt die Bordkarte 4, die der Passagier 2 mit seiner Eingabe der Karte angefordert hat. Der Passagier 2 möchte einen Fluggepäckstück 3 aufgeben, dass im Frachtraum des Flugzeuges transportiert werden soll. Erfindungsgemäß druckt das automatische Terminal 1 auf Anforderung zusätzlich zu der Bordkarte 4 einen Gepäckanhänger 5 (auch als Baggage Pass bezeichnet), den der Passagier mittels eines elastischen Bandes 5a am Griff 5b des Fluggepäckstücks 3 befestigt. Wie der Pfeil 6 symbolisiert, legt der Passagier 2 im Anschluss daran, dass mit dem Gepäckanhänger 5 versehene Fluggepäckstück 3 auf das Transportband 7, über das das Gepäckstück 3 zu einer weiter entfernten Arbeitstation 8 transportiert wird. Dort ist ein Arbeiter 9 damit beschäftigt, beispielsweise mit einem Hand-Barcodeleser die als Barcode auf dem Gepäckanhänger 5 aufgedruckten Informationen, die in dem automatischen Terminal 1 auf den Gepäckanhänger 5 aufgedruckt worden waren, auszulesen und in den Drucker 10 einzugeben, der anhand dieser Informationen das sog. IATA-BaggageTag 11 erstellt. Dieses BaggageTag 11 besteht aus einer streifenförmigen Banderole, die einseitig mit einer starken Klebeschicht versehen ist, so dass nach Abziehen einer Schutzfolie diese Banderole schlaufenförmig um den Griff des Gepäckstücks 3 geschlungen und durch Aneinanderpressen der Klebeflächen fixiert werden kann. Der Gepäckanhänger 5, über den die Informationen ausgelesen und auf den IATA-Baggage-Tack 11 übertragen worden waren, bleibt am Handgriff des Gepäckstücks 3 befestigt und wird mit dem Gepäckstück 3 in Pfeilrichtung 10 der (nicht im Einzelnen dargestellten) Sortieranlage zugeführt. Dort ist neben dem Lesegerät 13 für den Barcode auf dem IATA-BaggageTag 11 ein weiteres optisches Lesegerät 14 installiert, über das die Informationen auf dem Gepäckanhänger 5 ausgelesen werden können. Zusätzlich dazu ist das optische Lesegerät 14 auch in der Lage, Informationen von dem IATA-BaggageTag 11abzufragen, so dass sowohl die Informationen vom IATA-BaggageTag wie auch von dem Gepäckanhänger 5 erhalten und miteinander abgeklärt werden können bzw. bei Nichtlesbarkeit eines der beiden Informationsträger zumindest die Information des redundanten Informationsträger ausgelesen werden kann. Der Gepäckanhänger 5 kann zudem Klartextinformationen enthalten, die dem Personal der Anlage ermöglichen, im Fall von automatischen Leseproblemen in kürzester Zeit das Gepäckstück 3 dem richtigen Ziel zuzuführen.

## Patentansprüche

1. Verfahren zum selbsttätigen Einchecken von Passagieren und deren Gepäck, insbesondere in Flughäfen, mittels elektronischer Eingabe der Passagier- und/oder Reisedaten durch den Passagier selbst in ein automatisches Check-In Terminal, in dem, ggf. nach Auswahl verschiedener Kriterien, die Bordkarte (Boarding Pass) und ein oder mehrere Informationsträger zum Anbringen an dem Gepäck erstellt und ausgegeben werden, wobei der Passagier gehalten ist, an jedem eingecheckten Gepäckstück einen der zuvor erstellten Informationsträger zu befestigen, bevor er das jeweilige Gepäckstück der Transport- und Sortieranlage übergibt,
**dadurch gekennzeichnet, dass**
als Informationsträger ein leicht an dem Gepäckstück (3) zu befestigender Gepäckanhänger (5) erstellt wird, der mindestens alle Daten und Informationen maschinenlesbar enthält, die für eine spätere Generierung einer international standardisierten, vorzugsweise selbstklebenden Gepäckbanderole (IATA BaggageTag) (11) benötigt werden, welche innerhalb der Transport- und Sortieranlage zusätzlich zu dem Gepäckanhänger (5) an dem Gepäckstück (3) befestigt wird.

2. Verfahren zum Einchecken nach Anspruch 1,
**dadurch gekennzeichnet, dass**
der Gepäckanhänger (BaggageTag) (5) als RFID-Anhänger mit festem ID-Code erstellt und ausgegeben wird.

3. Verfahren zum Einchecken nach Anspruch 1,
**dadurch gekennzeichnet, dass**
der Gepäckanhänger (BaggageTag) (5) aus reißfestem Papier, Pappe oder Kunststoff vergleichbar der Bordkarte (4) erstellt und ausgegeben wird.

4. Verfahren zum Einchecken nach einem der Ansprüche 1 bis 3,
**dadurch gekennzeichnet, dass**
der Gepäckanhänger (BaggageTag) (5) mit zusätzlichen Zielinformation bedruckt oder programmiert wird, welche das Sortieren des Gepäckstücks (3) auch bei ausbleibender oder verspäteter Antwort des Datenbank-Rechners ermöglichen.

5. Verfahren zum Einchecken nach Anspruch 1 und 3,
**dadurch gekennzeichnet, dass**
auf den Gepäckanhänger (5)verschiedene Informationen, wie die Zieladresse des Passagiers (2), in Klartext aufgedruckt werden.

6. Verfahren zum Einchecken nach Anspruch 1 bis 5,
**dadurch gekennzeichnet, dass**
der Gepäckanhänger (5) mit einer leicht handhabbaren Verbindungstechnik mit dem Gepäckstück (3) verbunden wird.

7. Verfahren zum Einchecken nach Anspruch 1 bis 6,
**dadurch gekennzeichnet, dass**
der Gepäckanhänger (3) mittels elastischer Bänder, Kunststoffriemen oder ähnlichen bekannten haltbaren Befestigungstechniken (5a) mit dem Gepäckstück (3) verbunden wird.

8. Verfahren zum Einchecken nach Anspruch 1 bis 7,
**dadurch gekennzeichnet, dass**
nach Auflegen des mit dem Gepäckanhänger (5) versehenen Gepäckstückes (3) auf die Fördertechnik (7) der Transport- und Sortieranlage das Gepäckstück (3) zu einem Arbeitsplatz transportiert wird, wo die folgenden Arbeitsschritte durchgeführt werden:
a. Auslesen der Informationen aus dem Gepäckanhänger (5),
b. Übermitteln der ausgelesenen Daten an eine Druckeinheit (10),
c. Drucken einer standardisierten Gepäckbanderole (11),
d. Anbringen der standardisierten Gepäckbanderole (11) am Gepäckstück (3) zusätzlich zum Gepäckanhänger (5).

9. Verfahren zum Einchecken nach Anspruch 8,
**dadurch gekennzeichnet, dass**
das mit dem Gepäckanhänger (5) und der standardisierten Banderole (11) versehene Gepäckstück (3) an die Gepäcksortieranlage abgegeben wird, wo neben üblichen Barcode-Lesern (13) mindestens eine weitere optische oder elektronische Leseeinrichtung (14) installiert ist, mit der mindestens die auf einem der beiden an dem Gepäckstück (3) angebrachten Informationsträger befindlichen Informationen erfasst werden.

10. Verfahren zum Einchecken nach Anspruch 1 bis 9,
**dadurch gekennzeichnet, dass**
die von der weiteren optische oder elektronischen Leseeinrichtung (14) erfassten Informationen dem Datenbank-Rechner zur Auswertung und/oder zum Abgleich mit den von dem Barcode (13) Leser erfassten Informationen zugeleitet werden.
